# EUROPEAN PATENT APPLICATION

(11) **EP 4 618 265 A1**
(43) Date of publication of application: **17.09.2025**
(21) Application number: 25162660.2
(22) Date of filing: 10.03.2025
(51) Int. Cl.: H01M 50/107, H01M 50/119, H01M 50/131, H01M 50/152, H01M 50/159, H01M 50/167, H01M 50/342

(54) **CYLINDRICAL SECONDARY BATTERY**

(30) Priority: 11.03.2024 KR 20240033613
(71) Applicant: SAMSUNG SDI CO., LTD., Yongin-si, Gyeonggi-do 17084 (KR)
(72) Inventor: YOO, Yoon Sun, Yongin-si, Gyeonggi-do 17084 (KR); JUNG, Hyun Ki, Yongin-si, Gyeonggi-do 17084 (KR); KIM, Myung Seob, Yongin-si, Gyeonggi-do 17084 (KR); YU, Gwan Hyeon, Yongin-si, Gyeonggi-do 17084 (KR); LEE, Ho Jae, Yongin-si, Gyeonggi-do 17084 (KR); JUN, Woo Tae, Yongin-si, Gyeonggi-do 17084 (KR); CHO, Yoon Jong, Yongin-si, Gyeonggi-do 17084 (KR); YU, Jin Young, Yongin-si, Gyeonggi-do 17084 (KR)
(74) Representative: Marks & Clerk LLP

(57) **Abstract**

Disclosed is a cylindrical secondary battery capable of preventing a cap plate from rupturing before a notch ruptures by dispersing processing stress applied to the cap plate, thereby improving safety thereof. The cylindrical secondary battery may include an electrode assembly including a first electrode plate and a second electrode plate, a cylindrical can accommodating the electrode assembly and including an open end, and a cap plate coupled to the open end of the can and including a notch formed therein. The cap plate may further include an auxiliary groove formed therein so as to be spaced apart from the notch.

## Description

### FIELD

Embodiments of the present disclosure relate to a cylindrical secondary battery.

### BACKGROUND

Demand for a secondary battery in which both positive and negative electrode terminals are disposed on one side thereof has recently been increasing. This type of secondary battery can have an advantage in that a structure for electrical connection with the outside is simple.

Generally, in a cylindrical secondary battery having the above structure, an electrode assembly is accommodated in a cylindrical can. The can may be sealed by a cap plate. The can may be electrically connected to a negative electrode of the electrode assembly via a negative electrode current collector. A positive electrode terminal may be located on the upper end of the can. The positive electrode terminal may be electrically connected to a positive electrode of the electrode assembly via a positive electrode current collector. The cap plate may have a notch formed therein. If pressure in the cylindrical secondary battery increases, the notch ruptures and serves as a vent to discharge internal gas.

The information disclosed in this section is provided only for enhancement of understanding of the background of the disclosure and therefore it may contain information that does not form the related art.

### SUMMARY

Embodiments of the present disclosure provide a cylindrical secondary battery capable of dispersing processing stress applied to a cap plate, thereby improving safety thereof. Embodiments of the present disclosure relate to a cylindrical secondary battery capable of improving the structure of a cap assembly.

A cylindrical secondary battery according to some embodiments of the present disclosure includes an electrode assembly including a first electrode plate and a second electrode plate, a cylindrical can configured to accommodate the electrode assembly, the cylindrical can including an open end, and a cap plate coupled to the open end of the cylindrical can, the cap plate including a notch formed therein, wherein the cap plate further includes an auxiliary groove formed therein so as to be spaced apart from the notch.

The cylindrical can may include a disc-shaped upper surface portion and a side portion extending from the upper surface portion. The side portion may include a beading portion formed adjacent to an end portion of the side portion so as to be concave inward and a crimping portion formed by bending the end portion of the side portion.

The cylindrical secondary battery may further include a gasket interposed between the cap plate and the crimping portion and made of an insulative material such that the cap plate is insulated from the side portion.

The cap plate may include a flat area disposed between the beading portion and the crimping portion and a vent area formed to be stepped with respect to the flat area. The notch may be formed in the vent area.

The auxiliary groove may be formed in the flat area.

The auxiliary groove may be formed in a surface of the cap plate facing the crimping portion.

The auxiliary groove may be formed in a surface of the cap plate facing the beading portion.

The auxiliary groove may be formed in each of the surface of the cap plate facing the beading portion and the surface of the cap plate facing the crimping portion such that the auxiliary groove includes a first auxiliary groove and a second auxiliary groove.

The auxiliary groove formed in the surface of the cap plate facing the beading portion and the auxiliary groove formed in the surface of the cap plate facing the crimping portion may be disposed so as to be misaligned from each other.

The auxiliary groove may have a triangular section, a rectangular section, a U-shaped section, or a semicircular section.

The auxiliary groove may be provided in plural.

The auxiliary groove may be disposed, based on the radial direction of the cap plate, between a midpoint (e.g., a point a) between the outermost periphery of the gasket and the beading portion and a boundary point (e.g., a point b) between the flat area and the vent area.

Based on the thickness direction of the cap plate, the depth of the auxiliary groove may be less than the depth of the notch.

The cylindrical secondary battery may further include a positive electrode terminal riveted to the upper surface portion and a gasket interposed between the upper surface portion and the positive electrode terminal and made of an insulative material.

The cylindrical secondary battery may further include a first current collector disposed between the upper surface portion and the electrode assembly and electrically connected to the first electrode plate and the positive electrode terminal and a second current collector disposed between the cap plate and the second electrode plate and electrically connected to the second electrode plate.

The cylindrical secondary battery may further include a negative electrode lead disposed between the second current collector and the cap plate to electrically connect the second current collector to the side portion.

A cylindrical secondary battery according to other embodiments of the present disclosure includes an electrode assembly including a first electrode plate and a second electrode plate, a cylindrical can including an upper surface portion that is disc-shaped and a side portion extending from the upper surface portion, the cylindrical can being configured to accommodate the electrode assembly, a positive electrode terminal inserted into the upper surface portion so as to be insulated from the upper surface portion, a first current collector electrically connected to the first electrode plate and the positive electrode terminal, a second current collector electrically connected to the second electrode plate and the side portion, a cap plate coupled to the side portion, the cap plate including a notch formed therein and at least one auxiliary groove formed therein so as to be spaced apart from the notch, and a gasket interposed between the side portion and the cap plate and made of an insulative material.

The side portion may include a beading portion formed adjacent to an end portion of the side portion so as to be concave inward and a crimping portion formed by bending the end portion of the side portion.

The cap plate may include a flat area disposed between the beading portion and the crimping portion and a vent area formed to be stepped with respect to the flat area. The at least one auxiliary groove may be formed in the flat area, and the notch may be formed in the vent area.

The at least one auxiliary groove may be formed in at least one of a surface of the cap plate facing the crimping portion or a surface of the cap plate facing the beading portion within the flat area.

The at least one auxiliary groove may have a triangular section, a rectangular section, a U-shaped section, or a semicircular section.

The at least one auxiliary groove may be disposed, based on the radial direction of the cap plate, between a midpoint (e.g., point a) between the outermost periphery of the gasket and the beading portion and a boundary point (e.g., point b) between the flat area and the vent area.

Based on the thickness direction of the cap plate, the depth of the at least one auxiliary groove may be less than the depth of the notch.

At least some of the above and other features of the invention are set out in the claims.

### BRIEF DESCRIPTION OF THE DRAWINGS

The accompanying drawings, which are incorporated in this specification, illustrate example embodiments and serve to further illustrate the technical ideas of the disclosure in conjunction with the detailed description of example embodiments that follows, and the disclosure is not to be construed as limited to what is shown in such drawings. In the drawings:
FIG. 1 is a perspective view of a cylindrical secondary battery according to some embodiments of the present disclosure;
FIG. 2 is a cross-sectional view of the cylindrical secondary battery shown in FIG. 1;
FIG. 3 is a cross-sectional view showing a direction in which load is applied to a cap plate during some steps of a process of manufacturing the cylindrical secondary battery such as shown in FIG. 1;
FIG. 4 is an enlarged cross-sectional view of the cap plate of the cylindrical secondary battery shown in FIG. 2;
FIG. 5 is an enlarged cross-sectional view of parts of the cylindrical secondary battery shown in FIG. 4;
FIG.s 6(a) to 6(c) are cross-sectional views showing example shapes of an auxiliary groove according to some embodiments of the present disclosure; and
FIG.s 7(a) and 7(b) are cross-sectional views showing example positions and number of auxiliary grooves according to some embodiments of the present disclosure.

### DETAILED DESCRIPTION

Embodiments of the present disclosure are provided to more fully illustrate the disclosure to a person having ordinary skill in the art. The following embodiments may be modified in various other forms, and the scope of the disclosure is not limited to the following embodiments. The embodiments are provided to make the disclosure more complete and to convey the idea of the disclosure fully to those skilled in the art.

In the following drawings, the thickness or size of each layer is exaggerated for simplicity and clarity of description, and same reference symbols in the drawings refer to the same elements. As used herein, the term "and/or" includes any one of the enumerated items and any combination of one or more thereof. As used herein, the term "connected" refers not only to direct connection between members A and B but also to indirect connection between members A and B with member C interposed therebetween.

The terms used in the specification are intended to describe specific embodiments and are not intended to limit the disclosure. As used herein, singular forms may include plural forms, unless the context clearly indicates otherwise. As used herein, the terms "comprise" (or "include") and/or "comprising" (or "including") are intended to specify the presence of stated figures, numbers, steps, operations, members, elements, and/or groups thereof and do not exclude the presence or addition of one or more other figures, numbers, steps, operations, members, elements, and/or groups thereof.

While terms such as first and second are used herein to describe various members, parts, regions, layers, and/or portions, the members, the parts, the regions, the layers, and/or the portions are not to be limited by the terms. The terms are used only to distinguish one member, one part, one region, one layer, or one portion from another member, another part, another region, another layer, or another portion. Thus, a first member, a first part, a first region, a first layer, or a first portion hereinafter described may refer to a second member, a second part, a second region, a second layer, or a second portion without departing from the teachings of the disclosure.

Terms related to space, such as "beneath," "below," "lower," "above," and "upper," may be utilized to facilitate understanding of one element or feature shown in the drawings as different from another element or feature. The terms related to space are intended to facilitate understanding of the disclosure in various states of process or use and are not intended to limit the disclosure. For example, if an element or feature in a figure is inverted, an element or feature described as "beneath" or "below" becomes "above" or "upper." Thus, "beneath" is a concept that encompasses "above" or "below".

Hereinafter, a cylindrical secondary battery according to some embodiments of the present disclosure will be described in detail with reference to the accompanying drawings.

As discussed herein, a cylindrical secondary battery may have an electrode assembly accommodated in a cylindrical can. The can may be sealed by a cap plate. The can may be electrically connected to a negative electrode of the electrode assembly via a negative electrode current collector. A positive electrode terminal may be located on the upper end of the can. The positive electrode terminal may be electrically connected to a positive electrode of the electrode assembly via a positive electrode current collector. The cap plate may have a notch formed therein. If pressure in the cylindrical secondary battery increases, the notch can rupture and serve as a vent to discharge internal gas.

However, the aforementioned cap plate does not have a structure for supporting the cap plate compared to a conventional cap assembly which may be provided with a cap-up, a cap-down, and a current interrupt device (CID). A can and a cap plate gradually tend to be thinner to increase the capacity of a secondary battery. Thus, if force applied to form a crimping portion for sealing of a can is transferred to a notch in a cap plate, stress may be concentrated on the notch. This may make the rupture pressure of the notch lower than normal rupture pressure. Because fine cracks or damage may occur in the notch area, the rupture pressure of the notch may be further lowered. Thus, there is a risk of the notch rupturing due to gas pressure in the cylindrical secondary battery being lower than the original design pressure.

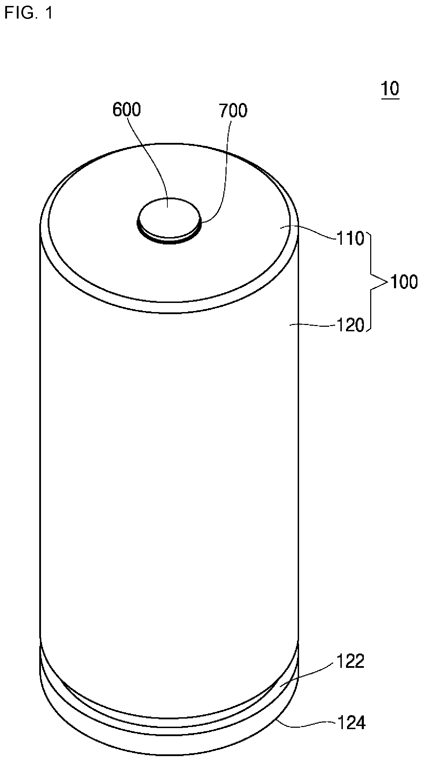

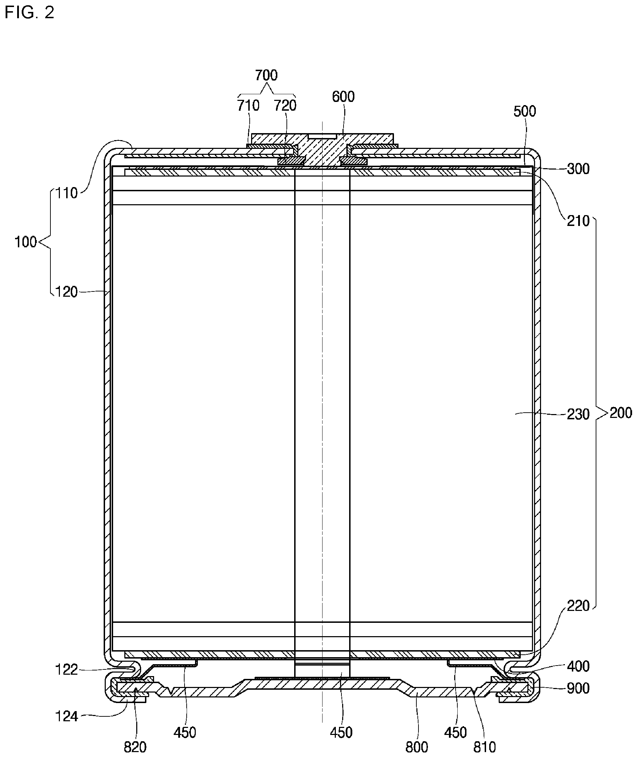

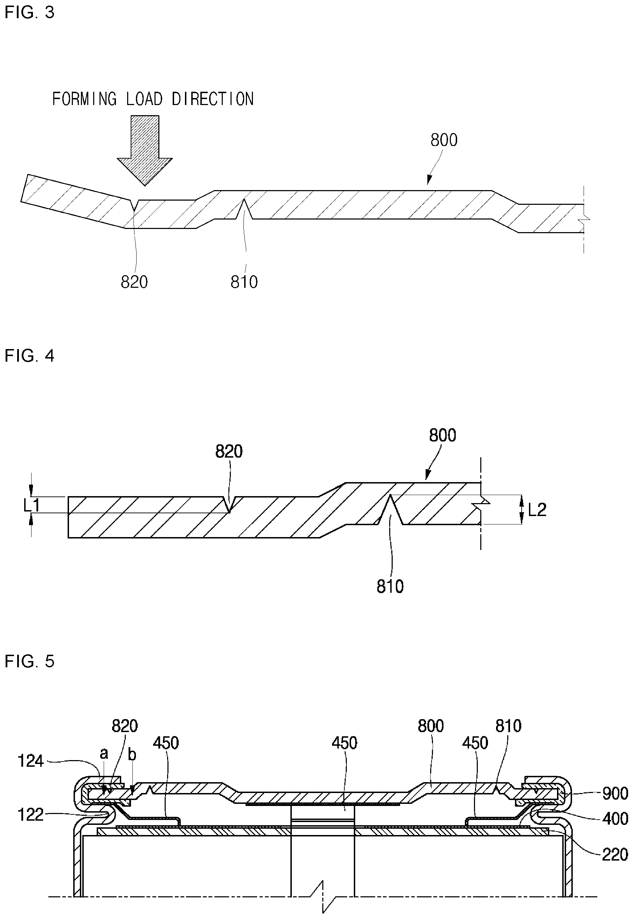

FIG. 1 is a perspective view of a cylindrical secondary battery 10 according to some embodiments of the present disclosure. FIG. 2 is a cross-sectional view of the cylindrical secondary battery 10 shown in FIG. 1. FIG. 3 is a cross-sectional view showing a direction in which load is applied to a cap plate 800 during some steps of a process of manufacturing the cylindrical secondary battery 10. FIG. 4 is an enlarged cross-sectional view of the cap plate 800 of the cylindrical secondary battery 10 shown in FIG. 2. FIG. 5 is an enlarged cross-sectional view of parts of the cylindrical secondary battery 10 shown in FIG. 4.

Referring to FIGs. 1 and 2, a secondary battery 10 according to some embodiments of the present disclosure may include a can 100, an electrode assembly 200, a first current collector 300, a second current collector 400, a negative electrode lead 450, an insulating member 500, a positive electrode terminal 600, a first gasket 700, a cap plate 800, and a second gasket 900.

Referring to FIGs. 1 and 2, the can 100 may accommodate the electrode assembly 200 and an electrolyte and may have a substantially cylindrical shape. The can 100 and/or cap plate can be made from the following materials: metal such as steel, nickel-plated steel, steel alloy, aluminum (Al), aluminum alloy, or cold sheet for deep drawing (SPCE), or a laminated film or plastic material that constitutes the pouch. The can 100 may include a circular upper surface portion 110 (e.g., a disc-shaped upper surface portion) and a side portion 120 extending downward from the upper surface portion 110. The positive electrode terminal 600 and the first gasket 700 may be coupled to the upper surface portion 110. The positive electrode terminal 600 may be made of Aluminum (Al). A beading portion 122 and a crimping portion 124 may be formed at the lower portion of the side portion 120. This depicted embodiment will be described on the assumption that the can 100 has an open lower portion (open end). In other embodiments, the can 100 may be formed such that the upper portion thereof is open.

The electrode assembly 200 may be assembled in the can 100 in such a manner that the electrode assembly 200 is inserted into the can 100 in a state in which the upper surface portion 110 of the can 100 is placed so as to face downward, and then the beading portion 122 is formed. The beading portion 122 may prevent escape and/or separation of the electrode assembly 200. The beading portion 122 may be formed adjacent to/at an end portion of the side portion 120 by pressing the (lower) end portion of the side portion 120 of the can 100 so as to be concave in the inward direction of the can 100. After the beading portion 122 is formed, the cap plate 800 and the second gasket 900 may be assembled (in connection) to the can 100, and then the crimping portion 124 may be formed to prevent escape and/or separation of the cap plate 800. The crimping portion 124 may be formed by bending the lower end portion of the side portion 120 of the can 100 in the inward direction of the can 100.

Referring to FIG. 2, the electrode assembly 200 may include a first electrode plate 210, a second electrode plate 220, and a separator 230.

The first electrode plate 210 may be one of a negative electrode plate and a positive electrode plate. This depicted embodiment will be described on the assumption that the first electrode plate 210 is a positive electrode plate. The first electrode plate 210, which is a positive electrode plate, may be formed as a thin metal plate having excellent conductivity, for example, an aluminum (Al) foil or mesh. The first electrode plate 210 may include a positive electrode coated portion coated with a positive electrode active material and a positive electrode uncoated portion not coated with the positive electrode active material. The positive electrode active material may include a chalcogenide compound, e.g., a composite metal oxide such as LiCoO₂, LiMn₂O₄, LiNiO₂, or LiNiMnO₂.

The second electrode plate 220 may be the other of the negative electrode plate and the positive electrode plate. This depicted embodiment will be described on the assumption that the second electrode plate 220 is the negative electrode plate. The second electrode plate 220, which is the negative electrode plate, may be formed as a conductive thin metal plate, for example, a copper (Cu) or nickel (Ni) foil or mesh. The second electrode plate 220 may include a negative electrode coated portion coated with a negative electrode active material and a negative electrode uncoated portion not coated with the negative electrode active material. The negative electrode active material may include, for example, a carbon-based material, silicon (Si), tin (Sn), tin oxide, a tin alloy composite, a transition metal oxide, lithium metal nitrite, or a metal oxide.

The separator 230 may be interposed between the first electrode plate 210 and the second electrode plate 220 to prevent short circuit between the first electrode plate 210 and the second electrode plate 220. The separator 230 may be made of, for example, polyethylene, polypropylene, or a porous copolymer of polyethylene and polypropylene.

In an example, the electrode assembly 200 may be formed such that the uncoated portion of the first electrode plate 210 is disposed so as to protrude upward above the upper end of the second electrode plate 220. The uncoated portion of the second electrode plate 220 may be disposed so as to protrude downward below the lower end of the first electrode plate 210 and may be wound in a jelly-roll shape. In this state, the first current collector 300 may be welded to the uncoated portion of the first electrode plate 210, and the second current collector 400 may be welded to the uncoated portion of the second electrode plate 220. The first current collector plate is made of the same material as the first electrode plate, and the second current collector plate is made of the same material as the second electrode plate.

Referring to FIG. 2, the first current collector 300 may be disposed between the upper surface portion 110 of the can 100 and the uncoated portion of the first electrode plate 210. The first current collector 300 may be welded and electrically connected to the first electrode plate 210, which is a positive electrode plate, and thus may be defined as a positive electrode current collector. The first current collector 300 may have a substantially disc shape. The first current collector 300 may be electrically connected at a central portion thereof to the positive electrode terminal 600. However, the first current collector 300 may need to be insulated from the can 100. Thus, a plate-shaped insulating member 500 may be provided between the first current collector 300 and the can 100.

Referring to FIG. 2, the second current collector 400 may be disposed between the cap plate 800 and the uncoated portion of the second electrode plate 220. The second current collector 400 may be welded and electrically connected to the second electrode plate 220, which is a negative electrode plate, and thus may be defined as a negative electrode current collector. The second current collector 400 may have a substantially disc shape. The second current collector 400 may be electrically connected to the side portion 120 of the can 100 via a plurality of negative electrode leads 450. In other embodiments, although not shown in the drawings, the second current collector 400 may be directly welded and electrically connected to the side portion 120 of the can 100 without the negative electrode leads 450.

Referring to FIG. 2, the negative electrode lead 450 may have a plate shape having a predetermined length and width. The negative electrode lead 450 may be disposed between the second current collector 400 and the cap plate 800. The negative electrode lead 450 may be conductive and may electrically connect the second current collector 400 to the side portion 120 of the can 100. One end of the negative electrode lead 450 may be electrically connected to the second current collector 400, and the other end thereof may be interposed between the beading portion 122 and the second gasket 900 to be electrically connected to the side portion 120 of the can 100. In some examples, one end of the negative electrode lead 450 may be welded to the second current collector 400, and the other end of the negative electrode lead 450 may or may not be welded to the side portion 120 of the can 100. The negative electrode lead 450 may be fixed without welding by the beading portion 122, the second gasket 900, and the crimping portion 124. Thus, welding between the side portion 120 of the can 100 and the negative electrode lead 450 may be omitted. Because the second current collector 400 and the negative electrode lead 450 are electrically connected to each other and the negative electrode lead 450 is electrically connected to the side portion 120 of the can 100, the can 100 may have a negative polarity. Therefore, the positive electrode terminal 600 may be mounted so as to be insulated from the can 100.

The insulating member 500 may have a disc shape having a cavity formed therein and may be made of an insulative material. The lower portion of the positive electrode terminal 600 and the first current collector 300 may be in contact with and electrically connected to each other through the cavity in the insulating member 500. The remaining portion of the insulating member 500 except for the cavity may cover the upper surface of the first current collector 300. To this end, the insulating member 500 may be formed to have the same size as or a larger size than the first current collector 300.

Referring to FIGs. 1 and 2, the positive electrode terminal 600 may be mounted so as to be insulated from the upper surface portion 110 of the can 100 by the first gasket 700. The upper portion of the positive electrode terminal 600 may be exposed to the outside of the upper surface portion 110 of the can 100, and the lower portion thereof may be in contact with and electrically connected to the first current collector 300. In some examples, the positive electrode terminal 600 may be a rivet terminal that is fixed to the upper surface portion 110 of the can 100 in a riveting manner (e.g., riveted) inside or outside the can 100.

Referring to FIGs. 1 and 2, the first gasket 700 may be made of an insulative material and may insulate the positive electrode terminal 600 and the can 100 from each other. In some examples, the first gasket 700 may include an upper gasket 710, which insulates the positive electrode terminal 600 and the outer surface of the upper surface portion 110 of the can 100 from each other, and a lower gasket 720, which insulates the positive electrode terminal 600 and the inner surface of the upper surface portion 110 of the can 100 from each other (e.g., the gasket 700 may be interposed between the upper surface portion 110 and the positive electrode terminal 600). In other embodiments, the upper gasket 710 and the lower gasket 720 may be integrally formed with each other. The above-described insulating member 500 may be interposed between the lower gasket 720 and the first current collector 300.

Referring to FIG. 2, the cap plate 800 may be a substantially disc-shaped plate and may be coupled to the side portion 120 of the can 100 via the second gasket 900. The cap plate 800 may be metal. The cap plate 800 may include a flat area (edge area of the cap plate 800) disposed between the beading portion 122 and the crimping portion 124 and a vent area (remaining area except for the flat area) formed to be stepped with respect to the flat area. The cap plate 800 may be coupled to the open end of the can 100 and may be fixed to the can 100 by the beading portion 122 and the crimping portion 124. The flat area of the cap plate 800 may be a portion fixed by the beading portion 122 and the crimping portion 124. Because the second gasket 900 (e.g., made of an insulative material) is disposed between the cap plate 800 and the side portion 120 of the can 100 (e.g., the crimping portion), the cap plate 800 may be insulated from the can 100 (e.g., the side portion 120 of the can 100). Thus, the cap plate 800 may be an electrically neutral (non-polar) part that does not have a negative polarity or a positive polarity. Referring to FIGs. 2 to 4, a notch 810 for discharge of gas may be formed in the surface of the cap plate 800. The notch 810 may be formed in the vent area of the cap plate 800. At least one auxiliary groove 820 may be formed in the cap plate 800 in order to disperse processing stress applied to the notch 810.

Referring to FIGs. 2 to 4, the notch 810 may be formed in the inner surface (facing the electrode assembly 200) of the cap plate 800. The notch 810 may be, for example, a groove having a V-shaped section. The notch 810 may be a circular groove formed in the cap plate 800 when viewed in plan. If pressure in the secondary battery 10 exceeds a predetermined magnitude (e.g., set pressure), the notch 810 may rupture and may serve as a safety vent through which gas escapes.

FIG. 3 shows a direction in which a forming load is applied when the cap plate 800 is coupled to the can 100 through crimping engagement during a process of manufacturing the secondary battery 10. The forming load may be applied in a direction from the outside of the cap plate 800 toward the inside of the cap plate 800 (e.g., toward the electrode assembly 200). As the crimping portion 124 is formed, the area of the cap plate 800 between the edge thereof and the notch 810 may be pressed. Thus, the edge of the cap plate 800 may be deformed to be bent toward the outside of the secondary battery 10. Because the portion of the cap plate 800 in which the notch 810 is formed is thinner than the remaining portion thereof, the portion in which the notch 810 is formed may be vulnerable to the forming load. If stress created by the forming load is transferred to the notch 810, the notch 810 may be deformed. This may cause the notch 810 to rupture before pressure in the secondary battery 10 reaches the set pressure (e.g., this may make the rupture pressure of the notch 810 lower than a reference value). This may lead to deterioration in reliability of the secondary battery 10. Therefore, the auxiliary groove 820 may be formed in order to disperse the forming load.

Referring to FIG. 4, the auxiliary groove 820 may be formed so as to be spaced apart from the notch 810. The auxiliary groove 820 may be disposed closer to the edge of the cap plate 800 than the notch 810. In some examples, the auxiliary groove 820 may be disposed in the flat area of the cap plate 800. In this depicted embodiment, the auxiliary groove 820 may be formed in a surface of the cap plate 800 opposite the surface thereof in which the notch 810 is formed. Because the notch 810 is formed in the surface of the cap plate 800 facing the beading portion 122 (e.g., facing the electrode assembly), the auxiliary groove 820 may be formed in the surface of the cap plate 800 facing the crimping portion 124. The depth L1 of the auxiliary groove 820 (e.g., the length of the auxiliary groove 820 in/based on the thickness direction of the cap plate 800) may be less than the depth L2 of the notch 810. If the depth L1 of the auxiliary groove 820 is equal to or greater than the depth L2 of the notch 810, the auxiliary groove 820 may rupture before the notch 810 ruptures. Therefore, the depth L1 of the auxiliary groove 820 may need to be less than the depth L2 of the notch 810.

The auxiliary groove 820 may be disposed between point a and point b shown in FIG. 5 in order to appropriately disperse force applied to the notch 810 during a crimping process. Referring to FIG. 5, based on the radial direction of the cap plate 800, point a may be a midpoint between the outermost periphery of the second gasket 900 and the beading portion 122. Point b may be a boundary point between the flat area of the cap plate 800 and the vent area of the cap plate 800. If the auxiliary groove 820 is disposed at a point farther outward than point a (in the outward direction of the case 100), the auxiliary groove 820 may not sufficiently disperse the load applied to the notch 810. If the auxiliary groove 820 is disposed at a point farther inward than point b (in a direction toward the center of the cap plate 800), the auxiliary groove 820 may receive an excessive amount of force, and thus the risk of rupture of the auxiliary groove 820 may increase. Therefore, according to the embodiments herein, the auxiliary groove 820 may need to be disposed between point a and point b.

The above-described auxiliary groove 820 may be formed in various shapes.

FIG.s 6(a) to 6(c) are cross-sectional views showing example shapes of the auxiliary groove 820 according to some embodiments of the present disclosure. FIG.s 7(a) and 7(b) are cross-sectional views showing example positions and number of the auxiliary grooves 820 according to some embodiments of the present disclosure.

Referring to FIG.s 6(a) to 6(c), an auxiliary groove 820a, 820b, or 820c may be formed in a surface of a cap plate 800a, 800b, or 800c opposite the surface thereof in which a notch 810a, 810b, or 810c is formed, and may have various shapes. In some examples, the auxiliary groove 820a may have a rectangular section. In other examples, the auxiliary groove 820b may have a U-shaped section. In still other examples, the auxiliary groove 820c may have a wide U-shaped or semicircular section.

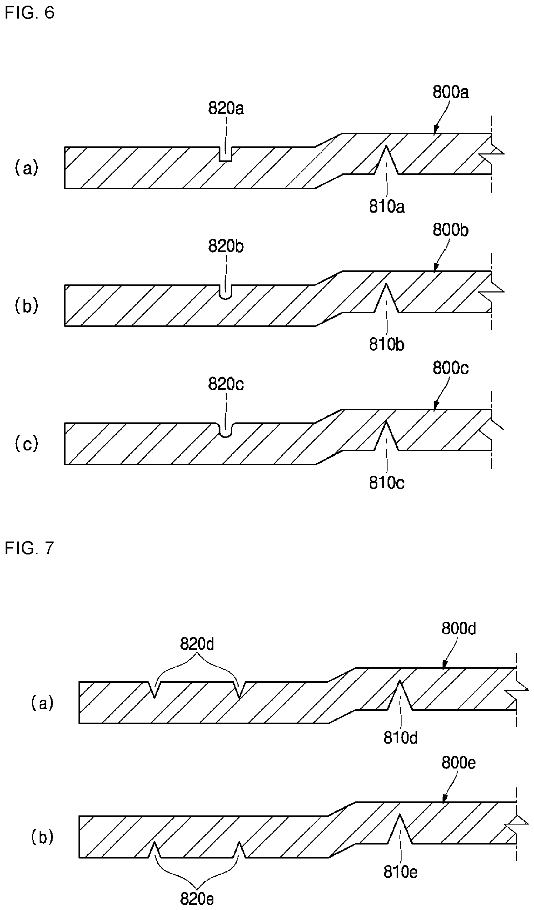

Referring to FIG. 7(a), an auxiliary groove 820d may be formed in a surface of a cap plate 800d opposite the surface thereof in which a notch 810d is formed. As shown, the auxiliary groove 820d may have a triangular section (cross-section). Referring to FIG. 7(b), an auxiliary groove 820e may be formed in the same surface of a cap plate 800e in which a notch 810e is formed (e.g., facing the beading portion 122). The auxiliary groove 820d or 820e may be provided in plural, so long as the plurality of auxiliary grooves 820d or 820e is disposed between point a and point b described above such that there are, in some embodiments, a first and second auxiliary groove. In other embodiments, the auxiliary grooves 820d and 820e may be disposed both in the surface of the cap plate 800 opposite the surface thereof in which the notch 810 is formed and/or in the surface of the cap plate 800 in which the notch 810 is formed so as to be aligned with or misaligned from each other.

As described above, the auxiliary groove 820 may serve to disperse processing stress applied to the cap plate 800, thereby preventing the cap plate 800 from rupturing before the notch 810 ruptures. As a result, the safety of the cylindrical secondary battery 10 may be improved.

As is apparent from the above description, according to some embodiments of the present disclosure, it may be possible to prevent a cap plate from rupturing before a notch ruptures by dispersing processing stress applied to the cap plate, thereby improving the safety of a cylindrical secondary battery.

Embodiments are set out in the following clauses.

Clause 1. A cylindrical secondary battery comprising: an electrode assembly comprising a first electrode plate and a second electrode plate; a cylindrical can accommodating the electrode assembly, the cylindrical can comprising an open end; and a cap plate coupled to the open end of the cylindrical can, the cap plate comprising a notch formed therein, wherein the cap plate further comprises an auxiliary groove formed therein so as to be spaced apart from the notch.

Clause 2. The cylindrical secondary battery of Clause 1, wherein the cylindrical can further comprises: a disc-shaped upper surface portion; and a side portion extending from the upper surface portion, wherein the side portion comprises: a beading portion formed adjacent to an end portion of the side portion so as to be concave inward; and a crimping portion formed by bending the end portion of the side portion.

Clause 3. The cylindrical secondary battery of Clause 2, further comprising a gasket interposed between the cap plate and the crimping portion and made of an insulative material such that the cap plate is insulated from the side portion.

Clause 4. The cylindrical secondary battery of Clause 3, wherein the cap plate further comprises: a flat area disposed between the beading portion and the crimping portion; and a vent area formed to be stepped with respect to the flat area, wherein the notch is formed in the vent area.

Clause 5. The cylindrical secondary battery of Clause 4, wherein the auxiliary groove is formed in the flat area.

Clause 6. The cylindrical secondary battery of Clause 5, wherein the auxiliary groove is formed in a surface of the cap plate facing the crimping portion.

Clause 7. The cylindrical secondary battery of Clause 5, wherein the auxiliary groove is formed in a surface of the cap plate facing the beading portion.

Clause 8. The cylindrical secondary battery of Clause 5, wherein the auxiliary groove is formed in each of a surface of the cap plate facing the beading portion and a surface of the cap plate facing the crimping portion such that the auxiliary groove comprises a first auxiliary groove and a second auxiliary groove.

Clause 9. The cylindrical secondary battery of Clause 8, wherein the auxiliary groove formed in the surface of the cap plate facing the beading portion and the auxiliary groove formed in the surface of the cap plate facing the crimping portion are disposed so as to be misaligned from each other.

Clause 10. The cylindrical secondary battery of Clause 6, wherein the auxiliary groove comprises a triangular section, a rectangular section, a U-shaped section, or a semicircular section.

Clause 11. The cylindrical secondary battery of Clause 6, wherein the auxiliary groove is provided in plural.

Clause 12. The cylindrical secondary battery of Clause 6, wherein the auxiliary groove is disposed, based on a radial direction of the cap plate, between a midpoint between an outermost periphery of the gasket and the beading portion and a boundary point between the flat area and the vent area.

Clause 13. The cylindrical secondary battery of Clause 12, wherein, based on a thickness direction of the cap plate, a depth of the auxiliary groove is less than a depth of the notch.

Clause 14. The cylindrical secondary battery of Clause 2, further comprising: a positive electrode terminal riveted to the upper surface portion; and a gasket interposed between the upper surface portion and the positive electrode terminal and made of an insulative material.

Clause 15. The cylindrical secondary battery of Clause 14, further comprising: a first current collector disposed between the upper surface portion and the electrode assembly and electrically connected to the first electrode plate and the positive electrode terminal; and a second current collector disposed between the cap plate and the second electrode plate and electrically connected to the second electrode plate.

Clause 16. The cylindrical secondary battery of Clause 15, further comprising a negative electrode lead disposed between the second current collector and the cap plate to electrically connect the second current collector to the side portion.

Clause 17. A cylindrical secondary battery comprising: an electrode assembly comprising a first electrode plate and a second electrode plate; a cylindrical can comprising an upper surface portion that is disc-shaped and a side portion extending from the upper surface portion, the cylindrical can accommodating the electrode assembly; a positive electrode terminal inserted into the upper surface portion so as to be insulated from the upper surface portion; a first current collector electrically connected to the first electrode plate and the positive electrode terminal; a second current collector electrically connected to the second electrode plate and the side portion; a cap plate coupled to the side portion, the cap plate comprising a notch formed therein and at least one auxiliary groove formed therein so as to be spaced apart from the notch; and a gasket interposed between the side portion and the cap plate and made of an insulative material.

Clause 18. The cylindrical secondary battery of Clause 17, wherein the side portion comprises: a beading portion formed adjacent to an end portion of the side portion so as to be concave inward; and a crimping portion formed by bending the end portion of the side portion.

Clause 19. The cylindrical secondary battery of Clause 18, wherein the cap plate further comprises: a flat area disposed between the beading portion and the crimping portion; and a vent area formed to be stepped with respect to the flat area, wherein the at least one auxiliary groove is formed in the flat area, and the notch is formed in the vent area.

Clause 20. The cylindrical secondary battery of Clause 19, wherein the at least one auxiliary groove is formed in at least one of a surface of the cap plate facing the crimping portion or a surface of the cap plate facing the beading portion within the flat area.

Clause 21. The cylindrical secondary battery of Clause 20, wherein the at least one auxiliary groove comprises a triangular section, a rectangular section, a U-shaped section, or a semicircular section.

Clause 22. The cylindrical secondary battery of Clause 21, wherein the at least one auxiliary groove is disposed, based on a radial direction of the cap plate, between a midpoint between an outermost periphery of the gasket and the beading portion and a boundary point between the flat area and the vent area.

Clause 23. The cylindrical secondary battery of Clause 22, wherein, based on a thickness direction of the cap plate, a depth of the at least one auxiliary groove is less than a depth of the notch.

The above are only example embodiments for implementing the present disclosure. The disclosure is not limited to the above embodiments, and it is to be understood by those skilled in the art that various modifications can be made without departing from the gist of the disclosure as claimed in the following claims.

## Claims

1. A cylindrical secondary battery comprising:
an electrode assembly comprising a first electrode plate and a second electrode plate;
a cylindrical can accommodating the electrode assembly, the cylindrical can comprising an open end; and
a cap plate coupled to the open end of the cylindrical can, the cap plate comprising a notch formed therein,
wherein the cap plate further comprises an auxiliary groove formed therein so as to be spaced apart from the notch.

2. The cylindrical secondary battery as claimed in claim 1, wherein the cylindrical can further comprises:
a disc-shaped upper surface portion; and
a side portion extending from the upper surface portion,
wherein the side portion comprises:
a beading portion formed adjacent to an end portion of the side portion so as to be concave inward; and
a crimping portion formed by bending the end portion of the side portion.

3. The cylindrical secondary battery as claimed in claim 2, further comprising a gasket (900) interposed between the cap plate and the crimping portion and made of an insulative material such that the cap plate is insulated from the side portion.

4. The cylindrical secondary battery as claimed in claim 2 or 3, wherein the cap plate further comprises:
a flat area disposed between the beading portion and the crimping portion; and
a vent area formed to be stepped with respect to the flat area,
wherein the notch is formed in the vent area.

5. The cylindrical secondary battery as claimed in claim 4, wherein the auxiliary groove is formed in the flat area.

6. The cylindrical secondary battery as claimed in any of claims 2 to 5, wherein one of:
the auxiliary groove is formed in a surface of the cap plate facing the crimping portion;
the auxiliary groove is formed in a surface of the cap plate facing the beading portion; or
the auxiliary groove is formed in each of a surface of the cap plate facing the beading portion and a surface of the cap plate facing the crimping portion such that the auxiliary groove comprises a first auxiliary groove and a second auxiliary groove, and wherein optionally the auxiliary groove formed in the surface of the cap plate facing the beading portion and the auxiliary groove formed in the surface of the cap plate facing the crimping portion are disposed so as to be misaligned from each other.

7. The cylindrical secondary battery as claimed in any preceding claim, wherein at least one of:
the auxiliary groove comprises a triangular section, a rectangular section, a U-shaped section, or a semicircular section; and/or
based on a thickness direction of the cap plate, a depth of the auxiliary groove is less than a depth of the notch.

8. The cylindrical secondary battery as claimed in any preceding claim, wherein the auxiliary groove is provided in plural.

9. The cylindrical secondary battery as claimed in any of claims 4 to 8, when dependent on claim 3, wherein the auxiliary groove is disposed, based on a radial direction of the cap plate, between a midpoint between an outermost periphery of the gasket (900) and the beading portion and a boundary point between the flat area and the vent area.

10. The cylindrical secondary battery as claimed in any preceding claim, further comprising:
a positive electrode terminal riveted to the upper surface portion; and
a gasket (700) interposed between the upper surface portion and the positive electrode terminal and made of an insulative material,
and optionally further comprising:
a first current collector disposed between the upper surface portion and the electrode assembly and electrically connected to the first electrode plate and the positive electrode terminal; and
a second current collector disposed between the cap plate and the second electrode plate and electrically connected to the second electrode plate,
and further optionally comprising:
a negative electrode lead disposed between the second current collector and the cap plate to electrically connect the second current collector to the side portion.

11. A cylindrical secondary battery comprising:
an electrode assembly comprising a first electrode plate and a second electrode plate;
a cylindrical can comprising an upper surface portion that is disc-shaped and a side portion extending from the upper surface portion, the cylindrical can accommodating the electrode assembly;
a positive electrode terminal inserted into the upper surface portion so as to be insulated from the upper surface portion;
a first current collector electrically connected to the first electrode plate and the positive electrode terminal;
a second current collector electrically connected to the second electrode plate and the side portion;
a cap plate coupled to the side portion, the cap plate comprising a notch formed therein and at least one auxiliary groove formed therein so as to be spaced apart from the notch; and
a gasket (900) interposed between the side portion and the cap plate and made of an insulative material.

12. The cylindrical secondary battery as claimed in claim 11, wherein the side portion comprises:
a beading portion formed adjacent to an end portion of the side portion so as to be concave inward; and
a crimping portion formed by bending the end portion of the side portion,
wherein optionally the cap plate further comprises:
a flat area disposed between the beading portion and the crimping portion; and
a vent area formed to be stepped with respect to the flat area,
wherein the at least one auxiliary groove is formed in the flat area, and the notch is formed in the vent area,
and
wherein further optionally the at least one auxiliary groove is formed in at least one of a surface of the cap plate facing the crimping portion or a surface of the cap plate facing the beading portion within the flat area.

13. The cylindrical secondary battery as claimed in claim 11 or 12, wherein the at least one auxiliary groove comprises a triangular section, a rectangular section, a U-shaped section, or a semicircular section.

14. The cylindrical secondary battery as claimed in claim 12 or 13, wherein the at least one auxiliary groove is disposed, based on a radial direction of the cap plate, between a midpoint between an outermost periphery of the gasket (900) and the beading portion and a boundary point between the flat area and the vent area.

15. The cylindrical secondary battery as claimed in any one of claims 11 to 14, wherein, based on a thickness direction of the cap plate, a depth of the at least one auxiliary groove is less than a depth of the notch.
